# EUROPEAN PATENT APPLICATION

(11) **EP 3 269 766 A1**
(43) Date of publication of application: **17.01.2018**
(21) Application number: 16764783.3
(22) Date of filing: 08.03.2016
(51) Int. Cl.: C08K 5/12, C08L 27/06

(54) **TRIMELLITIC ACID TRIESTER PLASTICIZER AND VINYL CHLORIDE RESIN COMPOSITION CONTAINING SAME**

(30) Priority: 13.03.2015 JP 2015051115
(71) Applicant: Adeka Corporation, Tokyo 116-0012 (JP)
(72) Inventor: FUJIMOTO Ryusaku, Saitama-shi Saitama 336-0022 (JP); NAGAHAMA Masaru, Saitama-shi Saitama 336-0022 (JP); TANAKA Yuki, Saitama-shi Saitama 336-0022 (JP)
(74) Representative: Gill Jennings & Every LLP
(86) International application number: PCT/JP2016/057174
(87) International publication number: WO 2016/147953

(57) **Abstract**

An object of the present invention is to provide a plasticizer having excellent press coloration resistance and cold resistance, and a vinyl chloride resin composition containing the plasticizer. The plasticizer is a trimellitic acid triester plasticizer containing a triester compound of a saturated aliphatic alcohol and trimellitic acid, wherein the saturated aliphatic alcohol contains a linear alcohol having 8 to 10 carbon atoms and a branched alcohol having 8 to 10 carbon atoms, and the ratio (mass ratio) of the linear alcohol and the branched alcohol is 78/22 to 50/50.

## Description

### TECHNICAL FIELD

The present invention relates to a trimellitic acid triester plasticizer and a vinyl chloride resin composition comprising the same (hereinafter, also simply referred to as "plasticizer" and "resin composition", respectively). More particularly, the present invention relates to: a trimellitic acid triester plasticizer which can impart a vinyl chloride resin composition with excellent press coloration resistance effect and cold resistance effect; and a vinyl chloride resin composition comprising the plasticizer.

### BACKGROUND ART

There are diverse plasticizers that plasticize resins and, as plasticizers for vinyl chloride resins in particular, a large number of plasticizers, examples of which include polyester-based plasticizers, epoxidized vegetable oil-based plasticizers such as epoxidized soybean oil (ESBO), phthalic acid ester-based plasticizers such as dioctyl phthalate (DOP) and diisononyl phthalate (DINP), adipic acid-based plasticizers such as dioctyl adipate (DOA) and diisononyl adipate (DINA) and trimellitic acid-based plasticizers such as trioctyl trimellitate (TOTM), have been widely used. It is known that the mechanical and physical properties, such as flexibility and tensile characteristics, are improved by incorporating these plasticizers into resins, and such plasticizers are added to resins upon processing the resins into a variety of molded articles such as building materials and electric wires.

When a plasticizer is added to a vinyl chloride resin composition, the plasticizer is required to be added in a certain amount in order to impart plasticity to the resulting molded article, and this causes coloration due to the thermal history during processing. As an index for the coloration caused by the thermal history during processing, for example, thermal stability is generally employed. However, particularly, injection molding and extrusion processing which are performed under high-temperature and high-pressure conditions have a problem of being more likely to cause coloration and, for example, press coloration resistance is employed as an index for the coloration caused by these processings.

Even those conventional plasticizers having excellent thermal stability do not necessarily have good press coloration resistance, and inhibition of coloration has thus been an extremely difficult problem.

Further, as a method of inhibiting coloration, in addition to selecting the amount and type of a plasticizer, it is common to use a large number of other additives in combination; however, this is known to impair the physical properties in some cases.

Moreover, the performance required for a plasticizer is not just plasticity and, for example, cold resistance is also an important required performance in automobile, electric wires, and the like.

For example, Patent Document 1 discloses a vinyl chloride-based soft resin composition in which cold resistance and the like are improved by using a vinyl chloride resin in combination with trimellitic acid, a pyromellitic acid-based plasticizer and a polycarboxylic acid ester-based plasticizer and further incorporating a basic silicate and a metallic soap. In addition, Patent Document 2 discloses that the electrical characteristics are improved by incorporating a hydrotalcite. Moreover, in Patent Document 3, it is disclosed that the cold resistance and heat resistance are improved by a trimellitic acid triester plasticizer comprising an aliphatic alcohol having 9 carbon atoms as a main component.

### RELATED ART DOCUMENTS

### PATENT DOCUMENTS

Patent Document 1: Japanese Unexamined Patent Application Publication No. H9-132689
Patent Document 2: Japanese Unexamined Patent Application Publication No. 2004-193138
Patent Document 3: Japanese Unexamined Patent Application Publication No. 2014-189688

### SUMMARY OF THE INVENTION

### PROBLEMS TO BE SOLVED BY THE INVENTION

However, those conventional plasticizers such as trimellitic acid triesters cannot be regarded as effective plasticizers that can satisfy both press coloration resistance and cold resistance at the same time for a vinyl chloride resin and, therefore, there is a demand for a superior plasticizer.

Therefore, an object of the present invention is to provide: a plasticizer which can solve the above-described problems and has excellent press coloration resistance and cold resistance; and a vinyl chloride resin composition comprising the plasticizer.

### MEANS FOR SOLVING THE PROBLEMS

The present inventors intensively studied to solve the above-described problems and consequently discovered that a trimellitic acid triester compound having a specific structure is a plasticizer which imparts a vinyl chloride resin composition with excellent press coloration resistance effect and cold resistance effect, thereby completing the present invention.

That is, the plasticizer of the present invention is a trimellitic acid triester plasticizer comprising a triester compound of a saturated aliphatic alcohol and trimellitic acid, which trimellitic acid triester plasticizer is characterized in that the saturated aliphatic alcohol comprises a linear alcohol having 8 to 10 carbon atoms and a branched alcohol having 8 to 10 carbon atoms and the ratio (mass ratio) of the linear alcohol and the branched alcohol is 78/22 to 50/50.

In the trimellitic acid triester plasticizer of the present invention, the ratio (mass ratio) of the linear alcohol and the branched alcohol is preferably 60/40 to 50/50. Further, the linear alcohol having 8 to 10 carbon atoms and the branched alcohol having 8 to 10 carbon atoms may be a combination of a linear alcohol and a branched alcohol which have different numbers of carbon atoms.

The vinyl chloride resin composition of the present invention is characterized by comprising the trimellitic acid triester plasticizer of the present invention in an amount of 20 to 120 parts by mass with respect to 100 parts by mass of a vinyl chloride resin.

### EFFECTS OF THE INVENTION

According to the present invention, a plasticizer having excellent press coloration resistance and cold resistance and a vinyl chloride resin composition comprising the plasticizer can be provided.

### MODE FOR CARRYING OUT THE INVENTION

Embodiments of the present invention will now be described concretely.

The plasticizer of the present invention is a triester compound of a saturated aliphatic alcohol and trimellitic acid (hereinafter, also referred to as "the present ester compound").

The saturated aliphatic alcohol used in the present invention is a mixture containing a linear alcohol having 8 to 10 carbon atoms and a branched alcohol having 8 to 10 carbon atoms, and the ratio (mass ratio) of the linear alcohol and the branched alcohol is 78/22 to 50/50 and, from the standpoints of press coloration resistance, cold resistance, plasticity and economic efficiency, the ratio is preferably 60/40 to 50/50.

When the mass ratio of the linear alcohol is higher than 78, the press coloration resistance may be reduced and the compatibility in a resin composition may be impaired, whereas when the mass ratio is less than 50, the cold resistance and/or the plasticity may be deteriorated.

In the plasticizer of the present invention, examples of the linear alcohol having 8 to 10 carbon atoms that is used as the saturated aliphatic alcohol include 1-octanol, 1-nonanol, and 1-decanol. Thereamong, it is preferred to use a combination of 1-octanol and 1-decanol, 1-octanol alone, 1-nonanol alone, or a combination of 1-octanol and 1-nonanol; it is more preferred to use 1-octanol and 1-decanol at a ratio (mass ratio) of 80/20 to 20/80, 1-octanol alone, or 1-octanol and 1-nonanol at a ratio (mass ratio) of 5/95 to 95/5; it is still more preferred to use 1-octanol and 1-decanol at a ratio (mass ratio) of 70/30 to 30/70, 1-octanol alone, or 1-octanol and 1-nonanol at a ratio (mass ratio) of 10/90 to 90/10; and it is yet still more preferred to use 1-octanol and 1-decanol at a ratio (mass ratio) of 60/40 to 40/60.

In the plasticizer of the present invention, examples of the branched alcohol having 8 to 10 carbon atoms that is used as the saturated aliphatic alcohol include isooctanols, such as 2-ethylhexanol, 3,3-dimethyl-2-hexanol, 3,4-dimethyl-1-hexanol, 2-methyl-1-heptanol, 3-methyl-1-heptanol, 5,5-dimethyl-1-hexanol, 2-methyl-3-ethylpentanol, 4-methyl-1-heptanol and 4-methyl-4-heptanol; isoheptanols, such as 2-nonanol, 3-nonanol, 2,4-dimethyl-1-heptanol, 2,2,5-trimethylhexanol, 2,3,4-trimethyl-2-hexanol, 2,6-dimethyl-4-heptanol, 4,6-dimethyl-1-heptanol, 2-methyl-2-octanol and 7-methyl-3-octanol; and isodecanols such as 8-methyl-1-nonanol.

Thereamong, branched alcohols having 9 carbon atoms are preferred.

The method of producing the plasticizer of the present invention is not particularly restricted and, for example, the plasticizer of the present invention can be obtained by adding, all together at once or in portions in the presence or absence of a catalyst, trimellitic acid or its anhydride or acid chloride to a mixture of a linear saturated aliphatic alcohol having 8 to 10 carbon atoms and a branched saturated aliphatic alcohol having 8 to 10 carbon atoms to perform esterification reaction or transesterification reaction and subsequently performing a post-treatment of the reaction product in accordance with a conventional method.

The plasticizer of the present invention may be used individually, or two or more thereof may be used in combination.

The resin composition of the present invention comprises the present ester compound in an amount of 20 to 120 parts by mass, preferably 30 to 100 parts by mass, more preferably 50 to 90 parts by mass, with respect to 100 parts by mass of a vinyl chloride resin.

When the amount of the present ester compound is less than 20 parts by mass, the press coloration resistance, cold resistance and plasticity are not sufficiently exerted, whereas when the present ester compound is used in an amount of greater than 120 parts by mass, the compatibility with a resin may be impaired. In the resin composition of the present invention, the present ester compound may be used individually, or two or more thereof may be used in combination.

The vinyl chloride resin used in the resin composition of the present invention is not particularly restricted by its polymerization method and may be produced by bulk polymerization, solution polymerization, suspension polymerization, emulsion polymerization or the like, and examples of the vinyl chloride resin include chlorine-containing resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styrene-acrylonitrile terpolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylate copolymers, vinyl chloride-acrylonitrile copolymers, and copolymers of vinyl chloride and various vinyl ethers; blend products of these resins; and blend products, block copolymers, graft copolymers and the like that are formed by these chlorine-containing resins with other chlorine-free synthetic resins, such as acrylonitrile-styrene copolymers, acrylonitrile-styrene-butadiene ternary copolymers, ethylene-vinyl acetate copolymers, ethylene-ethyl(meth)acrylate copolymers and polyesters. The polymerization degree is not particularly restricted and it is, for example, 300 to 100,000, preferably 300 to 50,000, more preferably 300 to 30,000. In the vinyl chloride resin composition of the present invention, such a resin may be used individually, or two or more thereof may be used in combination.

In the resin composition of the present invention, a plasticizer other than the present ester compound as well as various additives, such as an organic acid metal salt, a hydrotalcite compound, a zinc-modified hydrotalcite, a zeolite compound, a phenolic or sulfur-based antioxidant, a UV absorber, a hindered amine-based light stabilizer, a polyol and other inorganic compounds, can also be incorporated. The plasticizer other than the present ester compound and various additives may be used individually, or two or more thereof may be used in combination.

Examples of the plasticizer other than the present ester compound include phthalate-based plasticizers, such as dibutyl phthalate, butylhexyl phthalate, diheptyl phthalate, di-(2-ethylhexyl)phthalate, diisononyl phthalate, diisodecyl phthalate, dilauryl phthalate, dicyclohexyl phthalate and dioctyl terephthalate; adipate-based plasticizers, such as dioctyl adipate, diisononyl adipate, diisodecyl adipate and di(butyl diglycol)adipate; phosphate-based plasticizers, such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester-based plasticizers in which ethylene glycol, diethylene glycol, triethylene glycol, 1,3-butanediol, 1,4-butanediol, 1,5-pentanediol, 1,6-hexanediol, neopentyl glycol, trimethylolpropane or the like is used as a polyhydric alcohol, oxalic acid, malonic acid, succinic acid, glutaric acid, adipic acid, pimelic acid, suberic acid, azelaic acid, sebacic acid, phthalic acid, isophthalic acid, terephthalic acid, cinnamic acid or the like is used as a dibasic acid and, as required, a monohydric alcohol, a monocarboxylic acid (e.g., acetic acid or an aromatic acid) or the like is used as stoppers; epoxy-based plasticizers, such as epoxidized soybean oil, epoxidized linseed oil, epoxidized tung oil, epoxidized fish oil, epoxidized beef tallow oil, epoxidized castor oil, epoxidized safflower oil, epoxidized methyl stearate, epoxidized butyl stearate, epoxidized 2-ethylhexyl stearate, epoxidized stearyl stearate, epoxidized polybutadiene, tris(epoxypropyl)isocyanurate, epoxidized tall oil fatty acid esters, epoxidized linseed oil fatty acid esters, bisphenol A diglycidyl ether, vinylcyclohexene diepoxide, dicyclohexene diepoxide and 3,4-epoxycyclohexylmethyl epoxycyclohexane carboxylate; tetrahydrophthalic acid-based plasticizers; azelaic acid-based plasticizers; sebacic acid-based plasticizers, such as di-2-ethylhexyl sebacate (DOS) and dibutyl sebacate (DBS); stearic acid-based plasticizers; citric acid-based plasticizers; pyromellitic acid-based plasticizers; biphenylene polycarboxylic acid-based plasticizers; and polyhydric alcohol aromatic acid ester-based plasticizers (e.g., trimethylolpropane tribenzoate). Thereamong, for example, phthalate-based plasticizers, adipate-based plasticizers, sebacic acid-based plasticizers, epoxy-based plasticizers and polyhydric alcohol aromatic acid ester-based plasticizers are preferred. These plasticizers can be incorporated in any amount within a range that does not impair the effects of the present invention; however, the amount is preferably 1 to 90 parts by mass, more preferably 10 to 80 parts by mass, with respect to 100 parts by mass of the vinyl chloride resin.

Examples of the organic acid component of the organic acid metal salt include carboxylic acids, organophosphoric acids, and phenols.

Examples of the carboxylic acids include caproic acid, caprylic acid, pelargonic acid, octylic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachic acid, behenic acid, erucic acid, brassidic acid and similar acids; naturally-occurring mixtures of these acids, such as tallow fatty acids, coconut oil fatty acids, tung oil fatty acids, soybean oil fatty acids and cotton seed oil fatty acids; benzoic acid; *p*-*tert*-butylbenzoic acid; ethylbenzoic acid; isopropylbenzoic acid; toluic acid; xylic acid; salicylic acid; 5-*tert*-octylsalicylic acid; naphthenic acid; and cyclohexanecarboxylic acid. Thereamong, octylic acid, 2-ethylhexylic acid, neodecanoic acid, stearic acid, lauric acid, oleic acid, ricinoleic acid and benzoic acid are preferred.

Examples of the organophosphoric acids include mono- or di-octylphosphoric acid, mono- or di-dodecylphosphoric acid, mono- or di-octadecylphosphoric acid, mono- or di-(nonylphenyl)phosphoric acid, nonylphenyl phosphonate, and stearyl phosphonate.

Examples of the phenols include phenol, cresol, ethylphenol, cyclohexylphenol, nonylphenol, and dodecylphenol.

Examples of the metal component of the organic acid metal salt include lithium (Li), sodium (Na), potassium (K), calcium (Ca), magnesium (Mg), strontium (Sr), zinc (Zn), cesium (Cs), tin (Sn), barium (Ba), and aluminum (Al). Thereamong, magnesium, aluminum, calcium, zinc and barium are preferred, and magnesium aluminum, calcium and zinc are more preferred. The organic acid metal salt, which is a salt of the above-described organic acid component and metal component, can form a normal salt, an acid salt, a basic salt or an overbased salt depending on the combination of the organic acid component and the metal component, and such a salt may be used individually, or two or more thereof may be used in combination. Metal stearates, metal laurates, metal oleates, metal ricinoleates, metal neodecanoates, metal 2-ethylhexylates and metal benzoates are preferred because of their compatibility with a resin, high contribution to the stabilization effect and the like, and the metal is preferably magnesium, aluminum, calcium, zinc or barium. The above-described organic acid metal salts can be incorporated in any amount within a range that does not impair the effects of the present invention; however, the amount is 0.001 to 5 parts by mass with respect to 100 parts by mass of the vinyl chloride resin and, from the standpoints of thermal stability and processability, the amount is preferably 0.003 to 4 parts by mass, more preferably 0.005 to 3 parts by mass, still more preferably 0.01 to 2 parts by mass, particularly preferably 0.1 to 1 part by mass, with respect to 100 parts by mass of the vinyl chloride resin. When the amount of the organic acid metal salt is less than 0.001 parts by mass, the thermal stability and the like may be insufficient, whereas when the amount is greater than 5 parts by mass, the processability may be deteriorated.

Examples of the hydrotalcite compound include compounds represented by the following Formula (1):

Mg₁₋ₓAlₓ(OH)₂(A^{y-})_{x/z}·nH₂O (1)

(wherein, z represents 1 or 2; A^{y-} represents a z-valent anion, namely (CO₃)²⁻ or (ClO₄)⁻; x satisfies 0 < x ≤ 0.5; and n represents 0 or a positive number).

Specific examples of such compounds include the followings:
Mg_{0.750}Al_{0.250}(OH)₂(CO₃)_{0.125}·0.5H₂O
Mg_{0.692}Al_{0.308}(OH)₂(CO₃)_{0.154}·0.1H₂O
Mg_{0.683}Al_{0.317}(OH)₂(CO₃)_{0.159}·0.5H₂O
Mg_{0.667}Al_{0.333}(OH)₂(CO₃)_{0.167}·0.1H₂O
Mg_{0.750}Al_{0.250}(OH)₂(ClO₄)_{0.250}·0.5H₂O
Mg_{0.692}Al_{0.308}(OH)₂(ClO₄)_{0.308}·0.1H₂O
Mg_{0.667}Al_{0.333}(OH)₂(ClO₄)_{0.333}·0.1H₂O

Examples of commercially available products thereof include DHT-4A® (trade name, manufactured by Kyowa Chemical Industry Co., Ltd.) and MAGCELER® 1 (trade name, manufactured by Kyowa Chemical Industry Co., Ltd.). The above-described hydrotalcite compounds can be incorporated in any amount within a range that does not impair the effects of the present invention; however, the amount is preferably 0.01 to 5 parts by mass, particularly preferably 0.03 to 3 parts by mass, with respect to 100 parts by mass of the vinyl chloride resin.

Examples of the zinc-modified hydrotalcite compound include compounds represented by the following Formula (2):

MₚZn_{q}Alᵣ(OH)₂(CO₃)_{r/2}·mH₂O (2)

(wherein, M represents magnesium, or magnesium and calcium; p, q and r each represent a number that satisfies the conditions represented by the following equations; and m represents 0 or any integer: 0 < r ≤ 0.5, p + q = 1 - r, p ≥ q, 0.3 ≤ p < 1,0 < q < 0.5).

Specific examples of the zinc-modified hydrotalcite compound used in the present invention include those which are described in Japanese Patent Publication (Kokoku) No. S46-2280, Japanese Patent Publication (Kokoku) No. S47-32198, Japanese Patent Publication (Kokoku) No. S50-30039, Japanese Patent Publication (Kokoku) No. S48-29477, Japanese Patent Publication (Kokoku) No. S51-29129 and the like. Needless to say, such a commercially available product can also be used in the present invention. Specific examples thereof include the following compounds:
Mg_{0.38}Zn_{0.3}Al_{0.32}(OH)₂(CO₃)_{0.16}·0.2H₂O
Mg_{0.45}Zn_{0.23}Al_{0.32}(OH)₂(CO₃)_{0.16}
Mg_{0.48}Zn_{0.18}Al_{0.34}(OH)₂(CO₃)_{0.17}
Mg_{0.48}Zn_{0.2}Al_{0.32}(OH)₂(CO₃)_{0.16}
Mg_{0.50}Zn_{0.17}Al_{0.33}(OH)₂(CO₃)_{0.165}·0.45H₂O
Mg_{0.58}Zn_{0.17}Al_{0.25}(OH)₂(CO₃)_{0.125}·0.5H₂O
Mg_{0.50}Zn_{0.18}Al_{0.32}(OH)₂(CO₃)_{0.15}
Mg_{0.50}Zn_{0.2}Al_{0.30}(OH)₂(CO₃)_{0.16}
Mg_{0.50}Zn_{0.2}Al_{0.30}(OH)₂(CO₃)_{0.15}·0.52H₂O
Mg_{0.50}Zn_{0.25}Al_{0.25}(OH)₂(CO₃)_{0.125}
Mg_{0.51}Zn_{0.17}Al_{0.32}(OH)₂(CO₃)_{0.16}
M_{0.52}Zn_{0.16}Al_{0.32}(OH)₂(CO₃)_{0.16}·0.5H₂O
Mg_{0.55}Zn_{0.15}Al_{0.30}(OH)₂(CO₃)_{0.15}
M_{0.60}Zn_{0.14}Al_{0.26}(OH)₂(CO₃)_{0.13}
Mg_{0.60}Zn_{0.16}Al_{0.24}(OH)₂(CO₃)_{0.12}
Mg_{0.60}Zn_{0.20}Al_{0.20}(OH)₂(CO₃)_{0.1}
M_{0.40}Ca_{0.10}Zn_{0.18}Al_{0.32}(OH)₂(CO₃)_{0.16}
Mg_{0.30}Ca_{0.2}Zn_{0.2}Al_{0.30}(OH)₂(CO₃)_{0.15}
Mg_{0.50}Zn_{0.17}Al_{0.33}(OH)₂(CO₃)_{0.17}·0.5H₂O
M_{0.50}Zn_{0.17}Al_{0.33}(OH)₂(CO₃)_{0.17}·0.42H₂O
M_{0.60}Zn_{0.16}Al_{0.24}(OH)₂(CO₃)_{0.12}·0.45H₂O
M_{0.50}Zn_{0.25}Al_{0.25}(OH)₂(CO₃)_{0.13}·0.39H₂O
M_{0.67}Zn_{0.08}Al_{0.25}(OH)₂(CO₃)_{0.125}·0.5H₂O
M_{0.50}Zn_{0.17}Al_{0.33}(OH)₂(CO₃)_{0.17}
M_{0.50}Zn_{0.25}Al_{0.25}(OH)₂(CO₃)_{0.125}
M_{0.50}Zn_{0.17}Al_{0.33}(OH)₂(CO₃)_{0.17}·0.5H₂O
M_{0.58}Zn_{0.08}Al_{0.34}(OH)₂(CO₃)_{0.17}·0.5H₂O

From the standpoint of transparency, the refractive index of the zinc-modified hydrotalcite compound is preferably 1.52 to 1.56. Examples of commercially available products of such a zinc-modified hydrotalcite compound include ALCAMIZER® 4 (ALCAMIZER® P-93, manufactured by Kyowa Chemical Industry Co., Ltd.: trade name) and ALCAMIZER® 7 (manufactured by Kyowa Chemical Industry Co., Ltd.: trade name). Particularly, from the standpoint of transparency, it is preferred to use ALCAMIZER® 4 (ALCAMIZER® P-93). In the vinyl chloride resin composition of the present invention, a zinc-modified hydrotalcite compound whose surface is coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester or a wax, can be used as well. The above-described zinc-modified hydrotalcite compounds can be incorporated in any amount within a range that does not impair the effects of the present invention; however, the amount is usually 0.001 to 10 parts by mass with respect to 100 parts by mass of the vinyl chloride resin and, from the standpoints of thermal stability, processability and press coloration resistance, the amount is preferably 0.003 to 8 parts by mass, more preferably 0.05 to 6 parts by mass, still more preferably 0.1 to 5 parts by mass, particularly preferably 1 to 4 parts by mass, with respect to 100 parts by mass of the vinyl chloride resin. When the amount is less than 0.001 parts by mass, the thermal stability and the press coloration resistance may be insufficient, whereas when the amount is greater than 10 parts by mass, the processability may be deteriorated.

The zeolite compound is an aluminosilicate of alkali or alkaline earth metal which has a unique three-dimensional zeolite crystal structure, and representative examples thereof include A-type, X-type, Y-type and P-type zeolites, mordenite, analcite, sodalite-family aluminosilicates, clinoptilolite, erionite and chabazite. These zeolite compounds may each be either a hydrate containing crystal water (so-called zeolite water) or an anhydride in which the crystal water is removed. The above-described zeolite compounds can be incorporated in any amount within a range that does not impair the effects of the present invention; however, the amount is preferably 0.01 to 5 parts by mass, particularly preferably 0.03 to 3 parts by mass, with respect to 100 parts by mass of the vinyl chloride resin.

Examples of the phenolic antioxidant include 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(4,6-di-*tert*-butylphenol), 2,2'-ethylidene-bis(4,6-di-*tert*-butylphenol), 1,1,3-tris(2-methyl-4-hydroxy-5-*tert*-butylphenyl)butane, bis[2-tert-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tctrakis[methylene-3-(3,5-di-*tert*-butyl-4-hydroxyphenyl)propionate]methane, 2-*tert*-butyl-4-methyl-6-(2-acryloyloxy-3-*tert*-butyl-5-methylbenzyl)phenol, 3,9-bis[2-{3-(3-*tert*-butyl-4-hydroxy-5-methylphenyl)propanoyloxy}-1,1 -dimethylethyl]-2,4, 8,10-tetraoxaspiro [5.5]undecane, and triethylene glycol-bis[*β*-(3-*tert*-butyl-4-hydroxy-5-methylphenyl)propionate]. These phenolic antioxidants can be incorporated in any amount within a range that does not impair the effects of the present invention; however, the amount is preferably 0.01 to 1 part by mass, more preferably 0.03 to 0.8 parts by mass, with respect to 100 parts by mass of the vinyl chloride resin.

Examples of the sulfur-based antioxidant include dialkyl thiodipropionates, such as dilauryl thiodipropionate, dimyristyl thiodipropionate, myristylstearyl thiodipropionate and distearyl thiodipropionate; and *β*-alkylmercaptopropionates of polyols, such as pentaerythritol-tetra(*β*-dodecylmercaptopropionate). These sulfur-based antioxidants can be incorporated in any amount within a range that does not impair the effects of the present invention; however, the amount is preferably 0.01 to 1 part by mass, more preferably 0.03 to 0.8 parts by mass, with respect to 100 parts by mass of the vinyl chloride resin.

Examples of the UV absorber include 2-hydroxybenzophenones, such as 2,4-dihydroxybenzophenone, 2-hydroxy-4-methoxybenzophenone, 2-hydroxy-4-octoxybenzophenone, 2-hydroxy-4-*tert*-butyl-4'-(2-methacryloyloxyethoxyethoxy)benzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3-dodecyl-5-methylphenyl)benzotriazole, 2-(2-hydroxy-3-*tert*-butyl-5-C7 to C9 mixed alkoxy-carbonylethylphenyl)triazole, 2-(2-hydroxy-3,5 -dicumylphenyl)benzotriazole, 2,2'-methylene-bis(4-*tert*-octyl-6-benzotriazolylphenol) and polyethylene glycol esters of 2-(2-hydroxy-3-*tert*-butyl-5-carboxyphenyl)benzotriazole; 2-(2-hydroxyphenyl)-1,3,5-triazines, such as 2-(2-hydroxy-4-hexyloxyphenyl)-4,6-diphenyl-1,3 ,5-triazine, 2-(2-hydroxy-4-methoxyphenyl)-4,6-diphenyl-1,3,5-triazine, 2-(2-hydroxy-4-octoxyphenyl)-4,6-bis(2,4-dimethylphenyl)-1,3,5-triazine, 2-(2-hydroxy-4-acryloyloxyethoxyphenyl)-4,6-bis(2,4-dimethylphenyl)-1,3,5-triazine, 2-(2-hydroxy-4-(2-(2-ethylhexanoyloxy)ethyloxy)phenyl)-4,6-diphenyl-1,3,5-triazine, 2,4,6-tris(2-hydroxy-4-octyloxyphenyl)-1,3,5-triazine and 2,4,6-tris(2-hydroxy-3-methyl-4-(2-octanoyloxyethyl)phenyl)-1,3,5-triazine; benzoates, such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; and cyanoacrylates, such as ethyl-*α*-cyano-*β*,*β*-diphenylacrylate, methyl-2-cyano-3-methyl-3-(*p*-methoxyphenyl)acrylate and tetrakis(*α*-cyano-*β*,*β*-diphenylacryloyloxymethyl)methane. These UV absorbers can be incorporated in any amount within a range that does not impair the effects of the present invention; however, the amount is preferably 0.01 to 1 part by mass, more preferably 0.03 to 0.8 parts by mass, with respect to 100 parts by mass of the vinyl chloride resin.

Examples of the hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·bis(tridecyl)-1,2,3,4-butanetetracarboxylate, bis(1,2,2,6,6-pentamethyl-4-piperidyl)·bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-*tert*-octylamino-*s*-triazin e polycondensates, 1,5,8,12-tetrakis[2,4-bis(*N*-butyl-*N-*(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino-*s*-triazine-6-ylamino]und ecane, 1,6,11-tris[2,4-bis(*N*-butyl-*N*-(1,2,2,6,6-pentamethyl-4-piperidyl)amino-*s*-triazine-6-ylamino] undecane, 3,9-bis[1,1-dimethyl-2-{tris(2,2,6,6-tetramethyl-4-piperidyloxycarbonyl)butylcarbonyloxy} et hyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy }ethyl]-2,4,8,10-tetraoxaspiro[5.5]undecane, and bis(1-undecyloxy-2,2,6,6-tetramethylpiperidine-4-yl)carbonate. These hindered amine-based light stabilizers can be incorporated in any amount within a range that does not impair the effects of the present invention; however, the amount is preferably 0.01 to 1 part by mass, more preferably 0.03 to 0.8 parts by mass, with respect to 100 parts by mass of the vinyl chloride resin.

Examples of the polyol include trimethylolpropane, ditrimethylolpropane, pentaerythritol, dipentaerythritol, polypentaerythritol, stearic acid half esters of pentaerythritol or dipentaerythritol, bis(dipentaerythritol)adipate, glycerin, tris(2-hydroxyethyl)isocyanurate, sorbitol, mannitol, and lactitol. These polyols can be incorporated in any amount within a range that does not impair the effects of the present invention; however, the amount is preferably 0.01 to 2 parts by mass, more preferably 0.01 to 1 part by mass, with respect to 100 parts by mass of the vinyl chloride resin.

Examples of other inorganic compounds include calcium silicate, calcium phosphate, calcium oxide, calcium hydroxide, magnesium silicate, magnesium phosphate, magnesium oxide, and magnesium hydroxide. These other inorganic compounds can be incorporated in any amount within a range that does not impair the effects of the present invention; however, the amount is preferably 0.01 to 5 parts by mass, more preferably 0.03 to 3 parts by mass, with respect to 100 parts by mass of the vinyl chloride resin.

In addition, in the resin composition of the present invention, as required, other additive(s) such as a filler, a colorant, a cross-linking agent, an antistatic agent, an anti-fogging agent, an anti-plate-out agent, a surface treatment agent, a lubricant, a flame retardant, a fluorescent agent, an antifungal agent, an antibacterial agent, a metal inactivator, a mold-release agent, a pigment, a processing aid and/or a foaming agent may further be incorporated within a range that does not impair the effects of the present invention.

The resin composition of the present invention can be used irrespective of its preparation method, mixing method and processing method. Examples of the preparation method include a method of adding the above-described present ester compound, vinyl chloride resin and, as required, other additive components all together at once or in portions. Examples of the mixing method include a method of mixing the materials using a mixer or a kneading machine, such as a V-type blender, a ribbon blender, a Henschel mixer, a rocking mixer, a tumbler mixer, a planetary mixer, a Banbury mixer, a mill mixer, a mixing roll or a kneader. Examples of the processing method include: when the resin composition is in a powder or pellet form, injection molding using an injection molding machine or the like, extrusion processing using an extruder or the like, solution casting, compression molding, vacuum molding, press molding, powder molding, and calendering; and, when the resin composition is in a paste form, spread molding, dipping molding, gravure molding, slush molding, and screen molding. The resin composition of the present invention can be molded into a desired shape by any of these molding/processing methods.

The shape of the resulting molded article is not particularly restricted, and examples thereof include the shapes of a rod, a sheet, a film, a plate, a cylinder, a circle, an ellipse and the like; and special shapes of toys, ornaments and the like, such as star shapes and polygonal shapes.

The thus obtained molded article is useful for pipes (e.g., water pipes), pipe joints, gutters (e.g., rain gutters), window frame sidings, flat panels, corrugated panels, automobile materials (e.g., underbody coatings, instrument panels, consoles, door sheets, under carpets, trunk sheets and door trims), various leathers, decoration sheets, agricultural films, food packaging films, electric wire coatings, various foamed products, hose, medical tubes, food tubes, refrigerator gaskets, packings, wall papers, flooring materials, boots, curtains, shoe soles, gloves, water sealing plates, toys, decorative boards, blood bags, infusion solution bags, tarpaulins, mats, water-barrier sheets, civil engineering sheets, roofings, waterproof sheets, insulating sheets, industrial tapes, glass films, erasers and the like.

### EXAMPLES

The present invention will now be described in more detail by way of examples thereof. However, the present invention is not restricted by the following examples by any means.

### <Examples 1 to 10 and Comparative Examples 1 to 6>

Sheets were prepared by blending and roll-kneading 100 parts by mass of a vinyl chloride resin (ZEST® 1000Z, manufactured by Shin Dai-Ichi Vinyl Corporation), 2.5 parts by mass of a barium/zinc-based stabilizer (AC-255, manufactured by ADEKA Corporation) and 80 parts by mass of the respective plasticizers shown in Tables 1 and 2 below under the conditions of 170°C × 30 rpm (roll speed) for 7 minutes at 0.7 mm (sheet thickness).

### <Cold Resistance Test>

The measurement was performed using a Clash-Berg tester in accordance with JIS K-6773 (1999). The lower the softening temperature (°C), the higher is the cold resistance. The term "softening temperature" used herein refers to a lowest temperature limit at which a prescribed torsional rigidity (3.17 × 10³ kg/cm²) was obtained in the measurement. The cold resistance performance is considered excellent when the softening temperature is -40°C or lower.

### <Press Coloration Resistance Test>

Each 0.7 mm-thick sheet obtained above was laminated with one another, and the resulting laminate was pressed at 180°C for 5 minutes to prepare a 1 mm-thick sheet, after which the yellowness (Y.I.: Yellowness Index) thereof was measured using a general-purpose color difference meter COLOR ACE TC-8600A (manufactured by Tokyo Denshoku Co., Ltd.). The press coloration resistance performance is considered excellent when the yellowness is 5.0 or less.

The thus obtained test results are shown in Tables 1 and 2 below.

**[Table 1]**

| Example | Plasticizer | Cold resistance (Softening temperature (°C)) | Press coloration resistance (Yellowness) |
|---|---|---|---|
| 1 | A | -46.0 | 4.5 |
| 2 | B | -44.5 | 4.2 |
| 3 | c | -43.1 | 4.3 |
| 4 | D | -42.8 | 4.3 |
| 5 | E | -47.1 | 4.1 |
| 6 | F | -46.2 | 4.5 |
| 7 | G | -45.1 | 4.7 |
| 8 | H | -44.8 | 4.1 |
| 9 | I | -44.1 | 4.0 |
| 10 | J | -43.0 | 4.4 |

The plasticizers shown in Table 1 are as follows:
Plasticizer A: a triester of linear saturated aliphatic alcohols having 8 carbon atoms and 10 carbon atoms (mass ratio: 50/50), a branched saturated aliphatic alcohol having 9 carbon atoms and trimellitic acid, wherein the ratio (mass ratio) of the linear alcohols and the branched alcohol is 60/40;
Plasticizer B: the plasticizer A, wherein the ratio (mass ratio) of the linear alcohols and the branched alcohol is 50/50;
Plasticizer C: a triester of a linear saturated aliphatic alcohol having 8 carbon atoms, a branched saturated aliphatic alcohol having 9 carbon atoms and trimellitic acid, wherein the ratio (mass ratio) of the linear alcohol and the branched alcohol is 60/40;
Plasticizer D: the plasticizer C, wherein the ratio (mass ratio) of the linear alcohol and the branched alcohol is 50/50;
Plasticizer E: a triester of linear saturated aliphatic alcohols having 8 carbon atoms and 10 carbon atoms (mass ratio: 50/50), a branched saturated aliphatic alcohol having 10 carbon atoms and trimellitic acid, wherein the ratio (mass ratio) of the linear alcohols and the branched alcohol is 75/25;
Plasticizer F: the plasticizer E, wherein the ratio (mass ratio) of the linear alcohols and the branched alcohol is 60/40;
Plasticizer G: the plasticizer E, wherein the ratio (mass ratio) of the linear alcohols and the branched alcohol is 50/50;
Plasticizer H: a triester of a linear saturated aliphatic alcohol having 8 carbon atoms, a branched saturated aliphatic alcohol having 10 carbon atoms and trimellitic acid, wherein the ratio (mass ratio) of the linear alcohol and the branched alcohol is 75/25;
Plasticizer I: the plasticizer H, wherein the ratio (mass ratio) of the linear alcohol and the branched alcohol is 60/40; and
Plasticizer J: the plasticizer H, wherein the ratio (mass ratio) of the linear alcohol and the branched alcohol is 50/50.

**[Table 2]**

| Comparative Example | Plasticizer | Cold resistance | Press coloration resistance |
|---|---|---|---|
| | | (Softening temperature (°C)) | (Yellowness) |
| 1 | Comparative Compound 1 | -49.2 | 6.7 |
| 2 | Comparative Compound 2 | -46.2 | 5.6 |
| 3 | Comparative Compound 3 | -35.6 | 4.8 |
| 4 | Comparative Compound 4 | -48.1 | 5.5 |
| 5 | Comparative Compound 5 | -42.4 | 5.6 |
| 6 | Comparative Compound 6 | -44.5 | 5.6 |

The plasticizers shown in Table 2 are as follows:
Comparative Compound 1: a triester of linear saturated aliphatic alcohols having 8 carbon atoms and 10 carbon atoms (mass ratio: 50/50) and trimellitic acid, wherein the ratio (mass ratio) of the linear alcohols and a branched alcohol is 100/0;
Comparative Compound 2: a triester of a linear saturated aliphatic alcohol having 8 carbon atoms and trimellitic acid, wherein the ratio (mass ratio) of the linear alcohol and a branched alcohol is 100/0;
Comparative Compound 3: a triester of a branched saturated aliphatic alcohol having 9 carbon atoms and trimellitic acid, wherein the ratio (mass ratio) of a linear alcohol and the branched alcohol is 0/100;
Comparative Compound 4: an ester of linear and branched saturated aliphatic alcohols having 9 carbon atoms and trimellitic acid, wherein the ratio (mass ratio) of the linear alcohol and the branched alcohol is 80/20;
Comparative Compound 5: a triester of linear saturated aliphatic alcohols having 8 carbon atoms and 10 carbon atoms (mass ratio: 50/50), a branched saturated aliphatic alcohol having 10 carbon atoms and trimellitic acid, wherein the ratio (mass ratio) of the linear alcohols and the branched alcohol is 40/60; and
Comparative Compound 6: a triester of a linear saturated aliphatic alcohol having 8 carbon atoms, a branched saturated aliphatic alcohol having 10 carbon atoms and trimellitic acid, wherein the ratio (mass ratio) of the linear alcohol and the branched alcohol is 40/60.

As clearly seen from the results of Comparative Examples 1 to 6 shown in Table 2, a formulation that satisfies both press coloration resistance and cold resistance could not be found outside a specific range of the ratio of the linear alcohol(s) and the branched alcohol. On the other hand, as apparent from the results of Examples 1 to 10 shown in Table 1, it is seen that press coloration resistance and cold resistance can both be satisfied when the ratio of the linear alcohol(s) and the branched alcohol is in the range of the present invention.

## Claims

1. A trimellitic acid triester plasticizer comprising a triester compound of a saturated aliphatic alcohol and trimellitic acid,
wherein
said saturated aliphatic alcohol comprises a linear alcohol having 8 to 10 carbon atoms and a branched alcohol having 8 to 10 carbon atoms, and
the ratio (mass ratio) of said linear alcohol and said branched alcohol is 78/22 to 50/50.

2. The trimellitic acid triester plasticizer according to claim 1, wherein said ratio (mass ratio) of said linear alcohol and said branched alcohol is 60/40 to 50/50.

3. The trimellitic acid triester plasticizer according to claim 1, wherein said linear alcohol having 8 to 10 carbon atoms and said branched alcohol having 8 to 10 carbon atoms is a combination of a linear alcohol and a branched alcohol which have different numbers of carbon atoms.

4. A vinyl chloride resin composition comprising the trimellitic acid triester plasticizer according to claim 1 in an amount of 20 to 120 parts by mass with respect to 100 parts by mass of a vinyl chloride resin.
